# EUROPÄISCHE PATENTSCHRIFT

(11) **EP 2 108 023 B1**
(45) Veröffentlichungstag und Bekanntmachung des Hinweises auf die Patenterteilung: **12.10.2011**
(21) Anmeldenummer: 07857508.1
(22) Anmeldetag: 13.12.2007
(51) Int. Cl.: C08K 5/00, C08L 33/08, C08F 2/44

(54) **SPHÄRISCHE PARTIKEL, VERFAHREN ZUR HERSTELLUNG VON SPHÄRISCHEN PARTIKELN UND IHRE VERWENDUNG**
SPHERICAL PARTICLES METHOD FOR PRODUCTION OF SPHERICAL PARTICLES AND USE THEREOF
PARTICULES SPHÉRIQUES, PROCÉDÉ DE PRÉPARATION DE PARTICULES SPHÉRIQUES ET LEUR UTILISATION

(30) Priorität: 08.01.2007 EP 07100229
(43) Veröffentlichungstag der Anmeldung: 14.10.2009
(73) Patentinhaber: BASF SE, 67056 Ludwigshafen (DE)
(72) Erfinder: DU FRESNE VON HOHENESCHE, Cedric, NL-8934 CW Leeuwarden (NL); ADAMS, Stefan, 67065 Ludwigshafen (DE); HÖRNER, Klaus Dieter, 68623 Lampertheim (DE); WINTER, Dominik, 67157 Wachenheim (DE)
(86) Internationale Anmeldenummer: PCT/EP2007/063859
(87) Internationale Veröffentlichungsnummer: WO 2008/083891

(56) Entgegenhaltungen:
- EP-A- 0 437 742
- DE-A1- 1 811 247
- DE-A1- 19 803 098

## Beschreibung

Die vorliegende Erfindung betrifft sphärische Partikel mit einem mittleren Durchmesser im Bereich von 1 bis 20 µm, enthaltend
(a) 85 bis 99 Gew.-% eines vernetzten statistischen Copolymers mit einer Glastemperatur T_{g} im Bereich von -75 bis -40°C,
(b) und 1 bis 15 Gew.-% mindestens einer organischen Substanz, gewählt aus Wachsen, Schutzkolloiden und Weichmachern.

Weiterhin betrifft die vorliegende Erfindung wässrige Formulierungen, enthaltend erfindungsgemäße sphärische Partikel. Weiterhin betrifft die vorliegende Erfindung ein Verfahren zur Herstellung von erfindungsgemäßen sphärischen Partikeln und ihre Verwendung, insbesondere zur Beschichtung von Substraten.

Für zahlreiche Substrate wie beispielsweise Leder, Kunstleder und Textil, wünscht man ein angenehm mattes Aussehen. Damit derartige Substrate das gewünscht matte Aussehen erhalten, werden sie beschichtet. Für die Beschichtung von Leder verwendet man beispielsweise Formulierungen, die Kieselgele oder Schichtsilikate enthalten.

Mattes Leder hat jedoch in einigen Fällen einen unangenehmen Griff. Weiterhin stellt man fest, dass mattes Leder oder auch Kunstleder für einige Anwendungen wie beispielsweise Sitzmöbel oder Autositze Nachteile aufweist: wenn man sich auf dem betreffenden Sitzmöbel sitzend bewegt, gibt es Geräusche, die als "Knarzen" dem Fachmann bekannt, beim Kunden aber unerwünscht sind. Außerdem beobachtet man, dass die Rückpolierbarkeit häufig unbefriedigend ist.

Es bestand also die Aufgabe, Substrate wie beispielsweise Leder oder Kunstleder oder Textil oder Papier bereitzustellen, die einen angenehmen Griff aufweisen und die im Falle von Leder oder Kunstleder eine niedrige Rückpolierbarkeit aufweisen und nicht "knarzen". Weiterhin bestand die Aufgabe, ein Verfahren bereit zu stellen, durch das man entsprechende Substrate herstellen kann, die einen angenehmen Griff aufweisen und die im Falle von Leder oder Kunstleder eine niedrige Rückpolierbarkeit aufweisen und nicht "knarzen". Weiterhin bestand die Aufgabe, Formulierungen bereit zu stellen, mit deren Hilfe sich ein derartiges Verfahren durchführen lässt.

Dementsprechend wurden die eingangs definierten sphärischen Partikel gefunden.

Unter sphärischen Partikeln werden im Sinne der vorliegenden Erfindung kugelförmige oder im Wesentlichen kugelförmige Partikel verstanden, die auch ellipsoide Form haben können, bei denen aber der Durchmesser an der größten Stelle der Partikel bis höchstens 20%, bevorzugt bis höchstens 10% größer ist als der kleinste Durchmesser. Vorzugsweise sind erfindungsgemäße sphärische Partikel kugelförmig, auch bei Betrachtung unter dem Lichtmikroskop.

Der mittlere Durchmesser von erfindungsgemäßen sphärischen Partikeln liegt im Bereich von 1 bis 20 µm (Mikrometer), bevorzugt 3 bis 8 µm, bestimmt beispielsweise durch Coulter Counter.

In einer Ausführungsform der vorliegenden Erfindung weisen erfindungsgemäße Partikel eine breite Partikeldurchmesserverteilung auf, beispielsweise kann das Verhältnis der Partikeldurchmesser bei 10% und 90% der kumulativen Partikeldurchmesserverteilung im Bereich von 2,1 bis 6 liegen. In einer anderen Ausführungsform weisen erfindungsgemäße Partikel eine enge Partikeldurchmesserverteilung auf, d.h. das Verhältnis der Partikeldurchmesser bei 10% und 90% der kumulativen Partikeldurchmesserverteilung liegt im Bereich von 1 bis 2.

Die Partikeldurchmesserverteilung von erfindungsgemäßen Partikeln kann monomodal, bimodal oder multimodal sein.

Erfindungsgemäße Partikel enthalten
(a) 85 bis 99 Gew.-%, bevorzugt 90 bis 95 Gew.-% eines vernetzten statistischen Copolymers mit einer Glastemperatur T_{g} im Bereich von -75 bis -40°C, im Rahmen der vorliegenden Erfindung auch Copolymer (a) genannt,
(b) und 1 bis 15 Gew.-%, bevorzugt 5 bis 10 Gew.-% mindestens einer organischen Substanz, gewählt aus Wachsen, Schutzkolloiden und Weichmachern, im Rahmen der vorliegenden Erfindung auch als organische Substanz (b) bezeichnet.

Dabei sind die Angaben in Gew.-% jeweils auf die gesamte Festsubstanz der erfindungsgemäßen Partikel bezogen.

In einer Ausführungsform der vorliegenden Erfindung können erfindungsgemäße Partikel weitere Bestandteile aufweisen, beispielsweise organisches oder insbesondere anorganisches Pigment.

In einer anderen Ausführungsform der vorliegenden Erfindung bestehen erfindungsgemäße Partikel im wesentlichen aus Copolymer (a) und organischer Substanz (b). Bevorzugt enthalten erfindungsgemäße Partikel über Copolymer (a) und organische Substanz (b) hinaus keine weiteren Bestandteile.

Copolymer (a) sei im Folgenden näher beschrieben.

Bei Copolymer (a) handelt es sich um ein vernetztes statistisches Copolymer mit einer Glastemperatur T_{g} im Bereich von -75 bis -40°C, bevorzugt -70 bis -45°C, bestimmt beispielsweise durch DSC (Differentialthermoanalyse, Differential Scanning Calorimetry) nach DIN 53765.

In einer Ausführungsform der vorliegenden Erfindung handelt es sich bei Copolymer (a) um ein Copolymer, das durch Copolymerisation, beispielsweise Emulsionscopolymerisation und insbesondere Suspensionscopolymerisation hergestellt werden kann.

In einer Ausführungsform der vorliegenden Erfindung handelt es sich bei Copolymer (a) um ein statistisches Copolymer, das zumindest 80 Gew.-%, bevorzugt mindestens 85 Gew.-% mindestens ein Comonomer einpolymerisiert enthält, das gewählt wird aus (Meth)acrylsäure-C₄-C₂₀-alkylestern. Beispiele für geeignete (Meth)acrylsäure-C₄-C₂₀-alkylester sind (Meth)acrylsäure-n-butylester, (Meth)acrylsäure-n-hexylester, (Meth)acrylsäure-2-ethylhexylester, (Meth)acrylsäure-3-n-propylheptylester, (Meth)acrylsäure-n-decylester, (Meth)acrylsäure-n-octylester, bevorzugt Acrylsäure-n-butylester und besonders bevorzugt Acrylsäure-2-ethylhexylester. Dabei sind Angaben in Gew.-% jeweils auf gesamtes Copolymer (a) bezogen.

In einer Ausführungsform der vorliegenden Erfindung kann Copolymer (a) mehrere Comonomere, gewählt aus (Meth)acrylsäure-C₄-C₂₀-alkylestern, einpolymerisiert enthalten, beispielsweise n-Butylacrylat und 2-Ethylhexylacrylat. In der betreffenden Ausführungsform ist dann die Summe aus den Monomeren, die (Meth)acrylsäure-C₄-C₂₀-alkylester sind, mindest 80 Gew.-%, bevorzugt mindestens 85 Gew.-%.

Weiterhin enthält Copolymer (a) mindestens einen Vernetzer einpolymerisiert. Als Vernetzer geeignete Verbindungen enthalten mindestens zwei, beispielsweise zwei bis vier und bevorzugt genau zwei ethylenisch ungesättigte Doppelbindungen pro Molekül. Beispiele für geeignete Vernetzer sind Divinylbenzole, insbesondere 1,4-Divinylbenzol und 1,3-Divinylbenzol, Diolefine wie 1,3-Butadien und Isopren, Divinylester oder Diallylester von Dicarbonsäuren wie beispielsweise Divinylsuccinat, Diallylsuccinat, Glutarsäuredivinylester, Glutarsäurediallylester, Adipinsäuredivinylester, Adipinsäurediallylester, mit ethylenisch ungesättigten Carbonsäuren zweifach veresterte Diole, beispielsweise Ethylenglykoldi(meth)acrylat, Propylenglykoldi(meth)acrylat, Diethylenglykoldi(meth)acrylat, Butan-1,4-dioldi(meth)acrylat, Hexan-1,6-dioldi(meth)acrylat, weiterhin Vinyl- und Allylester von ethylenisch ungesättigten Carbonsäuren wie beispielsweise (Meth)acrylsäurevinylester und (Meth)acrylsäureallylester, außerdem Triallylcyanurat. Außerdem ist der (Meth)acrylsäureester von sogenanntem Tricyclodecenylalkohol (Dihydrotricyclopentadienyl(meth)acrylat) geeignet.

In einer Ausführungsform der vorliegenden Erfindung enthält Copolymer (a) keine weiteren Comonomer einpolymerisiert.

In einer anderen Ausführungsform der vorliegenden Erfindung kann Copolymer (a) mindestens ein weiteres Comonomer einpolymerisiert enthalten, beispielsweise ein bis drei Comonomere, gewählt aus Vinylaromaten wie beispielsweise α-Methylstyrol, para-Methylstyrol und insbesondere Styrol, ethylenisch ungesättigten Nitrilen wie beispielsweise (Meth)acrylnitril, C₁-C₃-Alkyl(meth)acrylat, beispielsweise Methylacrylat, Ethylacrylat, Ethylmethacrylat, n-Propyl(meth)acrylat, iso-Propyl(meth)acrylat und insbesondere Methylmethacrylat, α-Olefine mit beispielsweise 6 bis 24 C-Atomen wie beispielsweise n-Hexen, n-Octen, n-Decen, n-Dodecen, n-Tetradecen, n-Eicosen, α-C₂₂H₄₄, α-C₂₄H₄₈, weiterhin verzweigte Olefine wie Diisobuten, α-Triisobuten, α-Tetraisobuten, Polyisobutene mit 5 bis 20 Isobuteneinheiten pro Molekül, Vinylester von C₁-C₂₀-Carbonsäuren, insbesondere Vinylacetat, Vinylester von gesättigten C₂-C₂₀-Alkanolen. Weiterhin sind ethylenisch ungesättigte Mono- und Dicarbonsäuren geeignet wie beispielsweise Itaconsäure, Maleinsäure, (E)- und (Z)-Crotonsäure, bevorzugt Acrylsäure und ganz besonders bevorzugt Methacrylsäure.

In einer Ausführungsform der vorliegenden Erfindung enthält Copolymer (a) mindestens zwei der vorstehend genannten Comonomere einpolymerisiert. Im Rahmen der vorliegenden Erfindung übersteigt der gesamte Anteil an vorstehend genannten weiteren Comonomeren nicht 19,9 Gew.-%, bezogen auf gesamtes Copolymer (a).

In einer Ausführungsform der vorliegenden Erfindung enthält Copolymer (a) folgende Comonomere einpolymerisiert:
Im Bereich von 80 bis 99,9 Gew.-%, bevorzugt 85 bis 90 Gew.-% (Meth)acrylsäure-C₄-C₂₀-alkylester,
im Bereich von 0,1 bis 10 Gew.-%, bevorzugt 0,2 bis 8 Gew.-% Vernetzer und
im Bereich von null bis 19,9 Gew.-%, bevorzugt 1 bis 12 Gew.-% weiteres Comonomer.

Dabei sind Angaben in Gew.-% jeweils auf gesamtes Copolymer (a) bezogen.

Erfindungsgemäße sphärische Partikel enthalten weiterhin 1 bis 15 Gew.-%, bezogen auf die gesamte Festsubstanz der erfindungsgemäßen Partikel, mindestens eine organische Substanz (b), gewählt aus Wachsen, Schutzkolloiden und Weichmachern.

Unter Wachsen werden im Rahmen der vorliegenden Erfindung bei Zimmertemperatur feste Substanzen verstanden, die natürlichen oder synthetischen Ursprungs sein können, unzersetzt schmelzen können und die bei 20 °C knetbar, fest bis brüchig hart sind, eine grobe bis feinkristalline Struktur aufweisen und farblich durchscheinend bis opak, aber nicht glasartig sind.

Beispiele für Wachse sind natürliche Wachse wie beispielsweise Bienenwachs, Carnaubawachs, Candelillawachs, Rindenwachs, Ouricouriwachs, Zuckerrohrwachs, Montansäure- und Montanester-Wachs ("Montanestern"), Rohmontanwachs und insbesondere synthetische Wachse wie beispielsweise Fischer-Tropsch-Wachse, Niederdruck-Polyethylen-Wachse, beispielsweise mit Hilfe von Ziegler-Natta-Katalysatoren oder Metallocenkatalysatoren hergestellt, weiterhin partiell oxidierte Niederdruck-Polyethylen-Wachse mit einer Säurezahl im Bereich von 1 bis 150 mg KOH/g Wachs, bestimmt nach DIN 53402, wobei Niederdruck-Polyethylen-Wachse nicht nur Homopolymerwachse des Ethylens, sondern auch Copolymere des Polyethylens mit insgesamt bis zu 20 Gew.-% Comonomer wie beispielsweise Propylen, 1-Buten, 1-Penten, 1-Hexen, 1-Octen, 1-Decen oder 1-Dodecen umfasst und insbesondere Paraffinwachse und Isoparaffinwachse, beispielsweise Rohparaffine (Rohparaffinwachse), Gatschraffinate, entölte Rohparaffine (entölte Rohparaffinwachse), halb- oder vollraffinierte Paraffine (halb- oder vollraffinierte Paraffinwachse) und gebleichte Paraffine (gebleichte Paraffinwachse). Unter Paraffinwachsen werden im Zusammenhang mit der vorliegenden Erfindung insbesondere im Bereich von 25 bis 80°C, bevorzugt 30 bis 75°C schmelzende Paraffine verstanden, d.h. gesättigte Kohlenwasserstoffe, verzweigt oder unverzweigt, cyclisch oder vorzugsweise acyclisch, einzeln oder vorzugsweise als Gemisch von mehreren gesättigten Kohlenwasserstoffen. Paraffinwachse im Zusammenhang mit der vorliegenden Erfindung sind vorzugsweise zusammengesetzt aus gesättigten Kohlenwasserstoffen mit 18 bis 45 C-Atomen, Isoparaffine im Zusammenhang mit der vorliegenden Erfindung sind vorzugsweise zusammengesetzt aus gesättigten Kohlenwasserstoffen mit 20 bis 60 C-Atomen.

Bevorzugt wählt man Wachse, die als organische Substanz (b) dienen, aus Paraffinwachsen mit einem Schmelzpunkt von mindestens 25°C, insbesondere n-C₁₈H₃₈, n-C₂₀H₄₂ und höheren Paraffinen, weiterhin aus natürlichen Wachsen, wie beispielsweise Bienenwachs, Carnaubawachs und Montanestern.

Besonders bevorzugte Wachse sind Polyisobutene mit einem Molekulargewicht Mₙ im Bereich von 300 bis 5000 g/mol, bevorzugt von 400 bis 3000 g/mol, besonders bevorzugt von 500 bis 2300 g/mol, ganz besonders bevorzugt von 550 bis 1500 g/mol, beispielsweise bestimmt mittels Gelpermeationschromatographie (GPC). Derartige Polyisobutene können im Rahmen der vorliegenden Erfindung auch als Polyisobutenwachse bezeichnet werden.

In einer Ausführungsform der vorliegenden Erfindung weisen Polyisobutenwachse eine Polydispersität M_{w}/Mₙ im Bereich von 1,1 bis 3, bevorzugt von 1,5 bis 1,8 auf.

Polyisobutenwachse sind als solche bekannt, sie sind beispielsweise durch Oligomerisierung von Isobuten in Gegenwart eines Bortrifluorid-Katalysators erhältlich, s. z.B. DE-A 27 02 604. Als Isobuten-haltige Einsatzstoffe eignen sich sowohl Isobuten selber als auch Isobuten-haltige C₄-Kohlenwasserstoffströme, beispielsweise C₄-Raffinate, C₄-Schnitte aus der Isobutan-Dehydrierung, C₄-Schnitte aus Steamcrackem oder sogenannten FCC-Crackern (FCC: Fluid Catalysed Cracking), sofern betreffende C₄-Schnitte weitgehend von darin enthaltenem 1,3-Butadien befreit sind.

Weitere besonders bevorzugte Wachse sind Polyolefinwachse, insbesondere Polyethylenwachse mit einem mittleren Molekulargewicht Mₙ im Bereich von 500 bis 20.000 g/mol, bevorzugt 750 bis 10.000 g/mol und Polypropylenwachse mit einem mittleren Molekulargewicht Mₙ im Bereich von 750 bis 20.000 g/mol, sowie oxidierte Polyethylenwachse mit einem mittleren Molekulargewicht Mₙ im Bereich von 500 bis 20.000 g/mol, bevorzugt 750 bis 10.000 g/mol, sogenannte Oxidate, die sich durch partielle Oxidation von vorzugsweise geschmolzenem Polyethylenwachs mit Sauerstoff oder Sauerstoff-haltigen Gasen wie beispielsweise Luft herstellen lassen.

Weitere Beispiele für organische Substanzen (b) sind Schutzkolloide. Geeignete Schutzkolloide sind beispielsweise Polyvinylalkohole, insbesondere mit einer dynamischen Viskosität im Bereich von 5 bis 60, bevorzugt bis 57 mPa·s (4 Gew.-% in Wasser, gemessen nach DIN 53015 bei 20°C) und einem Verseifungsgrad von 75 bis 99%. Geeignet sind weiterhin Polyethylenoxide, insbesondere bei Zimmertemperatur feste Polyethylenoxide. Weitere Beispiele für geeignete organische Substanzen sind Cellulosederivate (modifizierte Cellulose) wie beispielsweise Carboxymethylcellulose, Hydroxymethylcellulose, Methylhydroxypropylcellulose, insbesondere mit einer Viskosität von 20 bis 50.000 mPa·s; Methylhydroxyethylcellulose, insbesondere mit einer Viskosität von 100 bis 50.000 mPa·s; Methylcellulose, insbesondere mit einer Viskosität von 10 bis 150.000 mPa·s, gemessen bei 20°C als 2 Gew.-% Lösung in Wasser mit einem Brookfield-Viskosimeter, außerdem kationische Polymere wie beispielsweise Poly-N-vinylimidazol und anionische Polymere wie beispielsweise Polyacrylsäure.

Besonders bevorzugte Schutzkolloide sind Polyvinylalkohole und modifizierte Cellulose und Mischungen von Polyvinylalkohol und modifizierter Cellulose.

Weichmacher (oder Weichmachungsmittel) sind im Zusammenhang mit der vorliegenden Erfindung solche organischen Stoffe, die in Copolymer (a) eingelagert werden und es geschmeidiger machen können. Vorzugsweise liegt Weichmacher unter Normalbedingungen (1 atm, 20°C) in flüssiger Form vor.

Beispiele für Weichmacher sind Esterverbindungen, gewählt aus den Gruppen der mit Alkanolen vollständig veresterten aliphatischen oder aromatischen Di- oder Polycarbonsäuren und der mindestens einfach mit Alkanol veresterten Phosphorsäure.

In einer Ausführungsform der vorliegenden Erfindung handelt es sich bei Alkanolen um C₁-C₁₀-Alkanole.

Bevorzugte Beispiele für mit Alkanol vollständig veresterte aromatische Di- oder Polycarbonsäuren sind mit Alkanol vollständig veresterte Phthalsäure, Isophthalsäure und Mellithsäure; beispielhaft seien genannt: Di-n-octylphthalat, Di-n-nonylphthalat, Di-n-decylphthalat, Di-n-octylisophthalat, Di-n-nonylisophthalat, Di-n-decylisophthalat.

Bevorzugte Beispiele für mit Alkanol vollständig veresterte aliphatische Di- oder Polycarbonsäuren sind beispielsweise Adipinsäuredimethylester, Adipinsäurediethylester, Adipinsäuredi-n-butylester, Adipinsäurediisobutylester, Glutarsäuredimethylester, Glutarsäurediethylester, Glutarsäuredi-n-butylester, Glutarsäurediisobutylester, Bernsteinsäuredimethylester, Bernsteinsäurediethylester, Bernsteinsäuredi-n-butylester Bernsteinsäurediisobutylester sowie Mischungen der vorstehend genannten Verbindungen.

Bevorzugte Beispiele für mindestens einfach mit Alkanol veresterte Phosphorsäurediarylester sind C₁-C₁₀-Alkyl-di-C₆-C₁₄-Aryl-Phosphate wie Isodecyldiphenylphosphat.

Weitere geeignete Beispiele für Weichmacher sind mindestens einfach mit C₁-C₁₀-Alkylcarbonsäure veresterte aliphatische oder aromatische Di- oder Polyole.

Bevorzugtes Beispiel für mindestens einfach mit C₁-C₁₀-Alkylcarbonsäure veresterte aliphatische oder aromatische Di- oder Polyole ist 2,2,4-Trimethylpentan-1,3-diolmonoisobutyrat.

Weitere geeignete Weichmacher sind Polyester, erhältlich durch Polykondensation von aliphatischer Dicarbonsäure und aliphatischem Diol, beispielsweise Adipinsäure oder Bernsteinsäure und 1,2-Propandiol, vorzugsweise mit einem M_{w} von 200 g/mol, und Polypropylenglykolalkylphenylether, vorzugsweise mit einem M_{w} von 450 g/mol.

Weitere geeignete Weichmacher sind mit zwei verschiedenen Alkoholen veretherte Polypropylenglykole mit einem Molekulargewicht M_{w} im Bereich von 400 bis 800 g/mol, wobei vorzugsweise einer der Alkohole ein Alkanol, insbesondere ein C₁-C₁₀-Alkanol sein kann und der andere Alkohol vorzugsweise ein aromatischer Alkohol, beispielsweise o-Kresol, m-Kresol, p-Kresol und insbesondere Phenol sein kann.

Ein weiterer Gegenstand der vorliegenden Erfindung sind wässrige Formulierungen, enthaltend erfindungsgemäße sphärische Partikel. Erfindungsgemäße wässrige Formulierungen können beispielsweise 1 bis 70 Gew.-%, bevorzugt 30 bis 50 Gew.-% erfindungsgemäße sphärische Partikel enthalten.

In einer Ausführungsform der vorliegenden Erfindung weisen erfindungsgemäße wässrige Formulierungen einen pH-Wert im Bereich von 5 bis 10, bevorzugt 6 bis 9 auf.

In einer Ausführungsform der vorliegenden Erfindung können erfindungsgemäße wässrige Formulierungen weniger als 2 Gew.-% anorganische Partikel wie beispielsweise Kieselgel oder Schichtsilikate enthalten. In einer speziellen Ausführungsform der vorliegenden Erfindung enthalten erfindungsgemäße wässrige Formulierungen keine anorganischen Partikel, gewählt aus Kieselgel und Schichtsilikaten.

In einer Ausführungsform der vorliegenden Erfindung können erfindungsgemäße wässrige Formulierungen noch einen oder mehrere Zuschlagstoffe enthalten, beispielsweise Biozide, filmbildende (Co)polymere (Bindemittel), Verdicker oder Tenside.

Geeignete Biozide sind beispielsweise 1,2-Benzisothiazolin-3-on ("BIT") (kommerziell erhältlich als Proxel®-Marken der Fa. Avecia Lim.) und dessen Alkalimetallsalze; andere geeignete Biozide sind 2-Methyl-2H-isothiazol-3-on ("MIT") und 5-Chlor-2-methyl-2H-isothiazol-3-on ("CIT"). Im Allgemeinen sind 10 bis 150 ppm Biozid ausreichend, bezogen auf gesamte erfindungsgemäße wässrige Formulierung.

Geeignete Bindemittel sind beispielsweise filmbildende Polyacrylate und Polyurethane, beispielsweise solche Polyacrylate, die (Meth)acrylsäure einpolymerisiert enthalten und mindestens ein Comonomer wie N-Methylol(meth)acrylamid, Glycidyl(meth)acrylamid oder Acetoacetyl(meth)acrylat. Beispiele für besonders geeignete Bindemittel finden sich in WO 2003/23071. Beispiele für geeignete Polyurethane finden sich in EP-A 0 437 742 und in DE-A 42 31 034.

Geeignete Verdicker sind beispielsweise vernetzbare Copolymere auf Basis von Acrylsäure und Acrylamid sowie Verdickungsmittel auf Basis von Polyurethan oder Polyvinylpyrrolidon oder Acrylat(co)polymerisaten. Weiterhin sind sogenannte Assoziativverdicker geeignet, beispielweise auf Basis hydrophob/hydrophil-gebauter Polyurethane, Polyharnstoffe und Polyetherpolyole.

Bevorzugte Beispiele für Verdicker sind Copolymere mit 85 bis 95 Gew.-% Acrylsäure, 4 bis 14 Gew.-% Acrylamid und gegebenenfalls bis 1 Gew.-%, bevorzugt 0,01 bis 0,5 Gew.-% eines (Meth)acrylamidderivats der Formel I 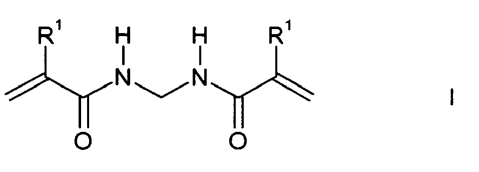 mit Molekulargewichten M_{w} im Bereich von 100.000 bis 200.000 g/mol, in denen R¹ gewählt wird aus Methyl und vorzugsweise Wasserstoff.

Weitere geeignete Bestandteile können ein oder mehrere Tenside sein, die anionisch, kationisch, zwitterionisch oder vorzugsweise nicht-ionisch sein können.

Geeignete anionische Tenside sind z.B. Alkalimetall- und Ammoniumsalze von Alkylsulfaten (Alkylrest: C₈ bis C₁₂), von Schwefelsäurehalbestern ethoxylierter Alkanole (Ethoxylierungsgrad: 4 bis 30, Alkylrest: C₁₂-C₁₈) und ethoxylierter Alkylphenole (Ethoxylierungsgrad: 3 bis 50, Alkylrest: C₄-C₁₂), von Alkylsulfonsäuren (Alkylrest: C₁₂-C₁₈) und von Alkylarylsulfonsäuren (Alkylrest: C₉-C₁₈).

Geeignete kationische Tenside sind in der Regel einen C₆-C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

Geeignete nicht-ionische Tenside sind z.B. ethoxylierte Mono-, Di- und Tri-Alkylphenole (Ethoxylierungsgrad: 3 bis 50, Alkylrest: C₄-C₁₂) sowie ethoxylierte Fettalkohole (Ethoxylierungsgrad: 3 bis 80; Alkylrest: C₈-C₃₆). Beispiele sind die Lutensol^{®}-Marken der BASF Aktiengesellschaft und die Triton^{®}-Marken der Union Carbide.

In einer bevorzugten Ausführungsform der vorliegenden Erfindung enthalten erfindungsgemäße wässrige Formulierungen einen oder mehrere weitere Bestandteile, beispielsweise Harnstoff-Formaldehyd-Kondensate, Melamin-Formaldehyd-Harze, Eiweiß oder Füllstoffe auf anorganischer oder vorzugsweise organischer Basis.

In einer bevorzugten Ausführungsform der vorliegenden Erfindung enthalten erfindungsgemäße wässrige Formulierungen weniger als 2 Gew.-% anorganische Partikel. Besonders bevorzugt ist es, erfindungsgemäßen wässrigen Formulierungen keine anorganischen Partikel beizumischen.

In einer Ausführungsform der vorliegenden Erfindung enthalten erfindungsgemäße wässrige Formulierungen
5 bis 30, bevorzugt mindestens 10 Gew.-% erfindungsgemäße Partikel,
1 bis 20, bevorzugt mindestens 3 Gew.-% filmbildendes Polymer,
0,05 bis 5, bevorzugt 0,2 bis 2 Gew.-% Verdicker,
   jeweils bezogen auf gesamte erfindungsgemäße wässrige Formulierung.

In einer Ausführungsform der vorliegenden Erfindung weisen erfindungsgemäße wässrige Formulierungen einen Feststoffgehalt im Bereich von 10 bis 50%, bevorzugt 15 bis 40% auf.

Ein weiterer Gegenstand der vorliegenden Erfindung ist die Verwendung von erfindungsgemäßen Partikeln, beispielsweise in Form von erfindungsgemäßen wässrigen Formulierungen, zur Beschichtung von Substraten, die vorzugsweise faserig sind. Ein weiterer Gegenstand der vorliegenden Erfindung ist ein Verfahren zur Beschichtung von Substraten, vorzugsweise von faserigen Substraten, unter Verwendung von erfindungsgemäßen Partikeln, beispielsweise in Form von erfindungsgemäßen wässrigen Formulierungen.

Geeignete Substrate sind vorzugsweise faserig, beispielsweise Papier, Textil, Kunstleder, Alcantara und insbesondere Leder. Dabei wird unter Leder die gegerbte, hydrophobierte und gefettete Haut von toten Tieren verstanden, beispielsweise von Rind, Kalb, Hirsch, Schwein, Ziegen, Kängurus oder Schafen. Geeignete Substrate können weiterhin eine Grundierung aufweisen. In einer besonderen Ausführungsform der vorliegenden Erfindung weist geeignetes Leder eine Grundierung sowie ein pigmentiertes Finish auf, und man trägt erfindungsgemäße Partikel bzw. erfindungsgemäße wässrige Formulierungen als Appreturschicht auf.

Unter Beschichtung ist dabei zu verstehen, dass erfindungsgemäße Partikel die Oberflächentopographie von beschichtetem Substrat beeinflussen und dass sich ein signifikanter Anteil von erfindungsgemäßen Partikeln an der beschichteten Oberfläche befindet. Erfindungsgemäß beschichtete Oberflächen wirken somit matt.

In einer Ausführungsform der vorliegenden Erfindung beschichtet man lediglich die Oberfläche von Substrat, die bei Verwendung von beschichtetem Substrat die Sichtseite ist, und lässt die anderen Oberflächen im wesentlichen unbeschichtet. Wünscht man beispielsweise Leder nach dem erfindungsgemäßen Verfahren zu beschichten, so beschichtet man vorzugsweise die Narbenseite von Leder und lässt die Fleischseite unbeschichtet.

Das erfindungsgemäße Aufbringen kann man durch an sich bekannte Methoden durchführen, beispielsweise Rollcoaten (Walzenauftrag), Streichen, Spritzen, sogenanntes "airless Spritzen", Drucken, Kaschieren, Plüschen, Bürsten, Gießen oder Aufsprühen. Nach Aufbringen von erfindungsgemäßen Partikeln kann man trocknen, beispielsweise bei Temperaturen im Bereich von 60 bis 80°C, und anschließend nachbügeln, beispielsweise bei Temperaturen im Bereich von 90 bis 160°C. Man kann auch hydraulisch nachbügeln, beispielsweise bei Temperaturen im Bereich von 70 bis 100°C. Es kommen konventionelle Vorrichtungen zum Bügeln in Frage wie beispielsweise Durchlaufbügelmaschinen.

In einer Ausführungsform der vorliegenden Erfindung bringt man 2 bis 30 g erfindungsgemäße wässrige Formulierung pro m² Substratoberfläche, insbesondere Lederoberfläche auf, wobei man die Menge/m² an Appretur an den Verwendungszweck des Substrates, insbesondere Leders anpasst und wobei die Angaben in g/m² jeweils auf den Feststoffanteil der betreffenden erfindungsgemäßen wässrigen Formulierung bezogen sind. So sind für Möbelleder 2 bis 15 g/m² bevorzugt und für Leder für Automobilinnenteile 5 bis 30 g/m².

Ein weiterer Gegenstand der vorliegenden Erfindung sind Substrate, erhältlich nach dem vorstehend beschrieben erfindungsgemäßen Verfahren. Erfindungsgemäße Substrate weisen eine angenehm matt aussehende Oberfläche auf, verbunden mit einem vorzüglichen Griff. Außerdem neigen sie, so es sich bei ihnen um Leder oder Kunstleder handelt, bei mechanischer Belastung weder zum "Knarzen" noch zum "Rauschen". Besonders bevorzugt handelt es sich bei erfindungsgemäßen Substraten um nach dem erfindungsgemäßen Verfahren beschichtetes Leder.

Erfindungsgemäße beschichtete Substrate sind außerdem weich, schichten und belasten einander nicht und sind klebfrei stapelbar.

Ein weiterer Gegenstand der vorliegenden Erfindung ist die Verwendung von erfindungsgemäßen Substraten zur Herstellung von Möbeln, insbesondere von Sitzmöbeln wie beispielsweise Sesseln oder Sofas, oder von Automobilinnenteilen wie beispielsweise Autositzen, Lenkrädern oder Türinnenverkleidungen.

Ein weiterer Gegenstand der vorliegenden Erfindung sind Möbel, insbesondere Sitzmöbel beispielsweise Sessel oder Sofas, oder Automobilinnenteile wie beispielsweise Autositze, Lenkräder oder Türinnenverkleidungen, hergestellt von erfindungsgemäßen Substraten. Erfindungsgemäße Möbel und Automobilinnenteile weisen eine angenehm matt aussehende Oberfläche auf, verbunden mit einem vorzüglichen Griff. Außerdem neigen erfindungsgemäße Möbel und insbesondere erfindungsgemäße Autositze bei mechanischer Belastung weder zum "Knarzen" noch zum "Rauschen".

Ein weiterer Gegenstand der vorliegenden Erfindung ist ein Verfahren zur Herstellung von sphärischen Partikeln mit einem mittleren Durchmesser im Bereich von 1 bis 20 µm, dadurch gekennzeichnet, dass man durch Suspensionspolymerisation
(a) ein vernetztes statistisches Copolymer mit einer Glastemperatur T_{g} im Bereich von -75 bis -40°C herstellt, welches
(b) 1 bis 15 Gew.-% mindestens einer organischen Substanz enthält, gewählt aus Wachsen, Schutzkolloiden und Weichmachern.

Vernetzte statistische Copolymere (a) und organische Substanzen (b) sind vorstehend beschrieben.

In einer Ausführungsform der vorliegenden Erfindung handelt es sich bei Copolymer (a) Copolymer (a) um ein Copolymer handelt, das zumindest 80 Gew.-% mindestens ein Comonomer einpolymerisiert enthält, das gewählt wird aus (Meth)acrylsäure-C₄-C₂₀-alkylestern.

In einer Ausführungsform der vorliegenden Erfindung wählt man Wachse aus Paraffinwachsen mit einem Schmelzpunkt von mindestens 25°C, natürlichen Wachsen, Polyisobutenen mit einem Molekulargewicht Mₙ im Bereich von 400 bis 1500 g/mol und Polyolefinwachsen mit einem mittleren Molekulargewicht Mₙ im Bereich von 500 bis 20.000 g/mol.

In einer Ausführungsform der vorliegenden Erfindung handelt es sich bei Schutzkolloid um Polyvinylalkohol.

Zur Durchführung des erfindungsgemäßen Verfahrens kann man beispielsweise so vorgehen, dass man zunächst einen oder mehrere organische Substanzen (b) wie beispielsweise ein oder mehrere Schutzkolloide mit Wasser vermischt, insbesondere indem man sie in Wasser löst, und dadurch eine sogenannte Wasserphase herstellt. Anschließend vermischt man die Comonomere, aus denen man Copolymer (a) herzustellen wünscht, miteinander und mit der Wasserphase und verrührt die Mischung stark, beispielsweise mit einem Schnellrührer, und startet danach die Copolymerisation durch Zugabe von einem oder mehreren Initiatoren oder einem Initiatorsystem. Man kann während der Copolymerisation weiterhin ein oder mehrere Comonomere zugeben, bevorzugt unterlässt man jedoch die Zugabe von einem oder mehreren Comonomeren während der Polymerisation.

Wünscht man einen oder mehrere Weichmacher einzusetzen, so ist es vorteilhaft, diese(n) Weichmacher zunächst mit den Comonomeren zu vermischen, aus denen man Copolymer (a) herzustellen wünscht, und dann der Wasserphase zuzusetzen.

Wünscht man ein oder mehrere Wachse einzusetzen, so ist es vorteilhaft, das Wachs bzw. die Wachse zunächst mit den Comonomeren zu vermischen, aus denen man Copolymer (a) herzustellen wünscht, und dann der Wasserphase zuzusetzen.

Als Initiatoren eignen sich Radikalbildner, insbesondere Verbindungen der allgemeinen Formel R²-N=N-R², bei denen R² beispielsweise aus C₃-C₁₀-Alkylgruppen gewählt wird, unsubstituiert oder vorzugsweise substituiert mit einer oder mehreren elektronenziehenden Gruppen, insbesondere Nitrilgruppen und CF₃-Gruppen, wie beispielsweise AIBN (Azobisisobutyronitril). Weitere geeignete Radikalbildner sind anorganische und vorzugsweise organische Peroxide, beispielsweise Diacetylperoxid, Di-tert.-butylperoxid, Diamylperoxid, Dioctanoylperoxid, Didecanoylperoxid, Dilauroylperoxid (Dilaurylperoxid), Dibenzoylperoxid, Bis-(o-toluyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperneodecanoat, tert.-Butylperbenzoat, Di-tert.-butylperoxid, tert.-Butylhydroperoxid, Cumolhydroperoxid, tert.-Butylperoxi-2-ethylhexanoat und Diisopropylperoxidicarbamat.

Weiterhin kann man Redoxinitiatoren als Beispiel für Initiatorsysteme einsetzen. Genannt seien beispielsweise Redoxinitiatoren aus Peroxiden und einer oder mehreren oxidierbaren Schwefelverbindungen, beispielsweise Systeme aus Acetonbisulfit und organischem Peroxid wie tert.-C₄H₉-OOH, aus Na₂S₂O₅ (Natriumdisulfit) und organischem Peroxid wie tert.-C₄H₉-OOH oder HO-CH₂SO₂Na und organischem Peroxid wie tert.-C₄H₉-OOH. Auch sind Systeme wie beispielsweise Ascorbinsäure/H₂O₂ oder Ascorbinsäure/tert.-Butylhydroperoxid geeignet.

Man kann bei beliebigem Druck copolymerisieren. Bevorzugt ist Normaldruck.

In einer Ausführungsform der vorliegenden Erfindung kann man das erfindungsgemäße Verfahren bei Temperaturen im Bereich von 30 bis 100°C durchführen, für den Fall, dass man bei höherem Druck als Atmosphärendruck arbeitet, sogar bei höheren Temperaturen wie beispielsweise bis zu 120°C und mehr. Bevorzugt polymerisiert man bei einer Temperatur, die unter dem Siedepunkt von Wasser bei dem betreffenden Druck liegt. Wünscht man das erfindungsgemäße Verfahren bei Normaldruck durchzuführen, so sind Temperaturen im Bereich von 30 bis 90°C bevorzugt.

In einer Ausführungsform der vorliegenden Erfindung copolymerisiert man über einen Zeitraum von 10 Minuten bis 24 Stunden, bevorzugt zwei bis zehn Stunden.

In einer Ausführungsform der vorliegenden Erfindung dosiert man nach dem Ende der eigentlichen Polymerisation noch mal einen Initiator oder ein Initiatorsystem nach, das gleich oder verschieden von dem Initiator bzw. Initiatorsystem sein kann, das man zum Starten der Copolymerisation eingesetzt hat.

Es ist bevorzugt, während der Durchführung des erfindungsgemäßen Verfahrens zu mischen, insbesondere zu rühren.

In einer Ausführungsform der vorliegenden Erfindung führt man das erfindungsgemäße Verfahren unter Verwendung von Alkalimetallnitrit, beispielsweise Kaliumnitrit oder Natriumnitrit durch.

In einer Ausführungsform der vorliegenden Erfindung arbeitet nicht unter Luft- und Sauerstoffausschluss.

Zum Abschluss des erfindungsgemäßen Verfahrens kann man die erhaltenen erfindungsgemäßen sphärischen Partikel abtrennen, beispielsweise durch Filtrieren und Waschen. Danach kann man die erfindungsgemäßen sphärischen Partikel trocknen, beispielsweise thermisch und vorzugsweise durch Sprühtrocknung.

Durch Vermischen mit Wasser und gegebenenfalls einer oder mehreren weiteren Substanzen kann man erfindungsgemäße sphärische Partikel zu erfindungsgemäßen wässrigen Formulierungen verarbeiten.

Die Erfindung wird durch Arbeitsbeispiele erläutert.

Allgemeine Vorbemerkung: Die Glastemperatur wurde mit Hilfe eines DSC-Geräts DSC822 (Serie TA8200) der Firma Mettler-Toledo mit einem Autosampler TSO 801 RO bestimmt. Das DSC-Gerät war mit einem Temperaturfühler FSR5 ausgerüstet.

Es wurde nach DIN 53765 gearbeitet. Es wurde jeweils die zweite Aufheizkurve der Auswertung zu Grunde gelegt. Abkühlen jeweils auf -110°C, Aufheizrate: 20°C/min, Aufheizen bis 150°C, 5 Minuten halten bei 150°C, anschließend Abkühlen auf-110°C, Aufheizrate: 20°C/min, Aufheizen bis 150°C.

### I. Herstellung von erfindungsgemäßen sphärischen Partikeln

### I.1 Herstellung von erfindungsgemäßen sphärischen Partikeln P.1

Man stellte zunächst eine Wasserphase W1, her, indem man miteinander verrührte:

| | |
|---|---|
| 786,7 g | Wasser |
| 138,5 g | Schutzkolloid Methylhydroxypropylcellulose als 5 Gew.-% wässrige Lösung, kommerziell erhältlich als Culminal® MHPC 100 |
| 34,7 g | Polyvinylalkohol (partiell verseiftes Polyvinylacetat) als 10 Gew.-% wässrige Lösung, Viskosität: 15 mPa·s nach DIN 53015 (gemessen als 4 Gew.-% wässrige Lösung bei 20°C), Verseifungszahl: 200 mg KOH/g, bestimmt nach DIN 53401, als Schutzkolloid, kommerziell erhältlich als Mowiol® 15-79 |
| 1,8 g | Natriumnitrit als 2,5 Gew.-% Lösung in Wasser |

Anschließend stellte man Monomerphase M1 her, indem man miteinander verrührte:

| | |
|---|---|
| 341,4 g | 2-Ethylhexylacrylat |
| 23,1 g | 1,4-Butandioldiacrylat |
| 20,3 g | Methacrylsäure |
| 20,3 g | Wachs 1 (Polyisobuten mit Mₙ 1000 g/mol) |

Man gab Monomerphase M1 zu Wasserphase W1 und vermischte 20 Minuten bei 3300 Umdrehungen pro Minute (Upm) mit Hilfe eines Dispermats und Dissolverscheibe. Es bildete sich eine Emulsion. Man überführte die so hergestellte Emulsion in einen Polymerisationskessel mit Rührer und gab 2 g einer 75 Gew.-% wässrigen Lösung von tert.-Butylperpivalat zu. Man stellte die Rührergeschwindigkeit auf 150 Upm. Man erhitzte innerhalb von 3 Stunden auf 85°C und rührte über einen Zeitraum von 3 Stunden bei 85°C. Zum Zweck der Desodorierung gab man 5,80 g einer wässrigen Lösung von tert.-Butylhydroperoxid (10 Gew.-%) und 0,32 g Ascorbinsäure bei 85°C zu. Man erhielt eine wässrige Suspension von erfindungsgemäßen sphärischen Partikeln P.1, deren pH-Wert man durch Zugabe von wässriger Ammoniaklösung (25 Gew.-%) auf 8 einstellte.

Analytische Daten:
Feststoffgehalt: 29,5%
Mittlerer Partikeldurchmesser: 7,7 µm
T_{g}: -45,9°C
Viskosität: 47 mPa·s, bestimmt mittels Brookfield-Rheometer bei 20°C.

### I.2 Herstellung von erfindungsgemäßen sphärischen Partikeln P.2

Man stellte zunächst eine Wasserphase W2, her, indem man miteinander verrührte:

| | |
|---|---|
| 58,26 kg | Wasser |
| 8,1 kg | Schutzkolloid Methylhydroxypropylcellulose als 5 Gew.-% wässrige Lösung, kommerziell erhältlich als Culminal® MHPC 100 |
| 2,03 kg | Polyvinylalkohol (partiell verseiftes Polyvinylacetat) als 10 Gew.-% wässrige Lösung, Viskosität: 15 mPa·s nach DIN 53015 (gemessen als 4 Gew.-% wässrige Lösung bei 20°C), Verseifungszahl: 200 mg KOH/g, bestimmt nach DIN 53401, als Schutzkolloid, kommerziell erhältlich als Mowiol® 15-79 |
| 130 g | Natriumnitrit als 2,5 Gew.-% Lösung in Wasser |

Anschließend stellte man Monomerphase M2 her, indem man miteinander verrührte:

| | |
|---|---|
| 24,98 kg | 2-Ethylhexylacrylat |
| 1,69 kg | 1,4-Butandioldiacrylat |
| 1,49 kg | Methacrylsäure |
| 1,49 kg | Wachs 2 (1:1-Gemisch aus den linearen Paraffinen C₁₈H₃₈ und C₂₀H₄₂). |

Man gab Monomerphase M2 zu Wasserphase W2 und vermischte 2 Stunden bei 4720 Upm mit Hilfe eines Rührwerks. Es bildete sich eine Emulsion. Man überführte die so hergestellte Emulsion in einen Polymerisationskessel mit Rührer und gab 150 g einer 75 Gew.-% wässrigen Lösung von tert.-Butylperpivalat zu. Man stellte die Rührergeschwindigkeit auf 80 Upm. Man erhitzte innerhalb von 3 Stunden auf 85°C und rührte über einen Zeitraum von 3 Stunden bei 85°C. Zum Zweck der Desodorierung gab man 420 g einer wässrigen Lösung von tert.-Butylhydroperoxid (10 Gew.-%) und 22,54 g Ascorbinsäure bei 85°C zu. Man erhielt eine wässrige Suspension von erfindungsgemäßen sphärischen Partikeln P.2.

Analytische Daten:
Feststoffgehalt: 29,0%
Mittlerer Partikeldurchmesser: 3,3 µm
T_{g}: -55,3°C
Viskosität: 39 mPa·s, bestimmt mittels Brookfield-Rheometer bei 20°C.

### I.3 Herstellung von erfindungsgemäßen sphärischen Partikeln P.3

Man stellte zunächst eine Wasserphase W3, her, indem man miteinander verrührte:

| | |
|---|---|
| 56,04 kg | Wasser |
| 9,95 kg | Schutzkolloid Methylhydroxypropylcellulose als 5 Gew.-% wässrige Lösung, kommerziell erhältlich als Culminal® MHPC 100 |
| 2,49 kg | Polyvinylalkohol (partiell verseiftes Polyvinylacetat) als 10 Gew.-% wässrige Lösung, Viskosität: 15 mPa·s nach DIN 53015 (gemessen als 4 Gew.-% wässrige Lösung bei 20°C), Verseifungszahl: 200 mg KOH/g, bestimmt nach DIN 53401, als Schutzkolloid, kommerziell erhältlich als Mowiol® 15-79 |
| 1,3 g | Natriumnitrit als 2,5 Gew.-% Lösung in Wasser |

Anschließend stellte man Monomerphase M3 her, indem man miteinander verrührte:

| | |
|---|---|
| 24,6 kg | 2-Ethylhexylacrylat |
| 1,66 kg | 1,4-Butandioldiacrylat |
| 1,46 kg | Methacrylsäure |
| 1,46 kg | Wachs 2 (1:1-Gemisch aus den linearen Paraffinen n-C₁₈H₃₈ und n-C₂₀H₄₂). |

Man gab Monomerphase M3 zu Wasserphase W3 und vermischte eine Stunde bei 2950 Upm mit Hilfe eines Rührwerks. Es bildete sich eine Emulsion. Man überführte die so hergestellte Emulsion in einen Polymerisationskessel mit Rührer und gab 150 g einer 75 Gew.-% wässrigen Lösung von tert.-Butylperpivalat zu. Man stellte die Rührergeschwindigkeit auf 80 Upm. Man erhitzte innerhalb von 3 Stunden auf 85°C und rührte über einen Zeitraum von 3 Stunden bei 85°C. Zum Zweck der Desodorierung gab man 420 g einer wässrigen Lösung von tert.-Butylhydroperoxid (10 Gew.-%) und 22,54 g Ascorbinsäure bei 85°C zu. Man erhielt eine wässrige Suspension von erfindungsgemäßen sphärischen Partikeln P.3, deren pH-Wert man durch Zugabe von wässriger Ammoniaklösung (25 Gew.-%) auf 8,6 einstellte.

Analytische Daten:
Feststoffgehalt: 28,7%
Mittlerer Partikeldurchmesser: 4,2 µm
T_{g}: -49,8°C
Viskosität: 41 mPa·s, bestimmt mittels Brookfield-Rheometer bei 20°C.

### I.4 Herstellung von erfindungsgemäßen sphärischen Partikeln P.4

Man stellte zunächst eine Wasserphase W4, her, indem man miteinander verrührte:

| | |
|---|---|
| 578,3 g | Wasser |
| 102,6 g | Schutzkolloid Methylhydroxypropylcellulose als 5 Gew.-% wässrige Lösung, kommerziell erhältlich als Culminal® MHPC 100 |
| 25,7 g | Polyvinylalkohol (partiell verseiftes Polyvinylacetat) als 10 Gew.-% wässrige Lösung, Viskosität: 15 mPa·s nach DIN 53015 (gemessen als 4 Gew.-% wässrige Lösung bei 20°C), Verseifungszahl: 200 mg KOH/g, bestimmt nach DIN 53401, als Schutzkolloid, kommerziell erhältlich als Mowiol® 15-79 |
| 1,3 g | Natriumnitrit als 2,5 Gew.-% Lösung in Wasser |

Anschließend stellte man Monomerphase M4 her, indem man miteinander verrührte:

| | |
|---|---|
| 252,9 g | 2-Ethylhexylacrylat |
| 17,1 g | 1,4-Butandioldiacrylat |
| 15g | Methacrylsäure |
| 15g | Wachs 1 (Polyisobuten mit Mₙ 1000 g/mol) |

Man gab Monomerphase M4 zu Wasserphase W4 und vermischte 20 Minuten bei 3300 Umdrehungen pro Minute (Upm) mit Hilfe eines Dispermats und Dissolverscheibe. Es bildete sich eine Emulsion. Man überführte die so hergestellte Emulsion in einen Polymerisationskessel mit Rührer und gab 2 g einer 75 Gew.-% wässrigen Lösung von tert.-Butylperpivalat zu. Man stellte die Rührergeschwindigkeit auf 150 Upm. Man erhitzte innerhalb von 3 Stunden auf 85°C und rührte über einen Zeitraum von 3 Stunden bei 85°C. Zum Zweck der Desodorierung gab man 5,80 g einer wässrigen Lösung von tert.-Butylhydroperoxid (10 Gew.-%) und 0,32 g Ascorbinsäure bei 85°C zu. Man erhielt eine wässrige Suspension von erfindungsgemäßen sphärischen Partikeln P.4, deren pH-Wert man durch Zugabe von wässriger Ammoniaklösung (25 Gew.-%) auf 8 einstellte.

Analytische Daten:
Feststoffgehalt: 29,6%
Mittlerer Partikeldurchmesser: 8,1 µm
T_{g}: -49,3°C
Viskosität: 38 mPa·s, bestimmt mittels Brookfield-Rheometer bei Raumtemperatur.

### I.5 Herstellung von erfindungsgemäßen sphärischen Partikeln P.5

Man stellte zunächst eine Wasserphase W5, her, indem man miteinander verrührte:

| | |
|---|---|
| 578,3 g | Wasser |
| 102,6 g | Schutzkolloid Methylhydroxypropylcellulose als 5 Gew.-% wässrige Lösung, kommerziell erhältlich als Culminal® MHPC 100 |
| 25,7 g | Polyvinylalkohol (partiell verseiftes Polyvinylacetat) als 10 Gew.-% wässrige Lösung, Viskosität: 15 mPa·s nach DIN 53015 (gemessen als 4 Gew.-% wässrige Lösung bei 20°C), Verseifungszahl: 200 mg KOH/g, bestimmt nach DIN 53401, als Schutzkolloid, kommerziell erhältlich als Mowiol® 15-79 |
| 1,3 g | Natriumnitrit als 2,5 Gew.-% Lösung in Wasser |

Anschließend stellte man Monomerphase M5 her, indem man miteinander verrührte:

| | |
|---|---|
| 252,9 g | 2-Ethylhexylacrylat |
| 17,1 g | 1,4-Butandioldiacrylat |
| 15g | Methacrylsäure |
| 15g | Wachs 2 (1:1-Gemisch aus den linearen Paraffinen n-C₁₈H₃₈ und n-C₂₀H₄₂). |

Man gab Monomerphase M5 zu Wasserphase W5 und vermischte 20 Minuten bei 3300 Umdrehungen pro Minute (Upm) mit Hilfe eines Dispermats und Dissolverscheibe. Es bildete sich eine Emulsion. Man überführte die so hergestellte Emulsion in einen Polymerisationskessel mit Rührer und gab 2 g einer 75 Gew.-% wässrigen Lösung von tert.-Butylperpivalat zu. Man stellte die Rührergeschwindigkeit auf 150 Upm. Man erhitzte innerhalb von 3 Stunden auf 85°C und rührte über einen Zeitraum von 3 Stunden bei 85°C. Zum Zweck der Desodorierung gab man 5,80 g einer wässrigen Lösung von tert.-Butylhydroperoxid (10 Gew.-%) und 0,32 g Ascorbinsäure bei 85°C zu. Man erhielt eine wässrige Suspension von erfindungsgemäßen sphärischen Partikeln P.5, deren pH-Wert man durch Zugabe von wässriger Ammoniaklösung (25 Gew.-%) auf 8 einstellte.

Analytische Daten:
Feststoffgehalt: 29,1%
Mittlerer Partikeldurchmesser: 8,1 µm
T_{g}: -48,7°C
Viskosität: 37 mPa·s, bestimmt mittels Brookfield-Rheometer bei Raumtemperatur.

### I.6 Herstellung von erfindungsgemäßen sphärischen Partikeln P.6

Man stellte zunächst eine Wasserphase W6, her, indem man miteinander verrührte:

| | |
|---|---|
| 278,6 g | Wasser |
| 119,4 g | Schutzkolloid Methylhydroxypropylcellulose als 5 Gew.-% wässrige Lösung, kommerziell erhältlich als Culminal® MHPC 100 |
| 29,9 g | Polyvinylalkohol (partiell verseiftes Polyvinylacetat) als 10 Gew.-% wässrige Lösung, Viskosität: 15 mPa·s nach DIN 53015 (gemessen als 4 Gew.-% wässrige Lösung bei 20°C), Verseifungszahl: 200 mg KOH/g, bestimmt nach DIN 53401, als Schutzkolloid, kommerziell erhältlich als Mowiol® 15-79 |
| 1,9 g | Natriumnitrit als 2,5 Gew.-% Lösung in Wasser |

Anschließend stellte man Monomerphase M6 her, indem man miteinander verrührte:

| | |
|---|---|
| 368,1 g | 2-Ethylhexylacrylat |
| 24,9 g | 1,4-Butandioldiacrylat |
| 21,9 g | Methacrylsäure |
| 21,9 g | Wachs 2 (1:1-Gemisch aus den linearen Paraffinen n-C₁₈H₃₈ und n-C₂₀H₄₂). |

Man gab Monomerphase M6 zu Wasserphase W6 und vermischte 20 Minuten bei 3300 Umdrehungen pro Minute (Upm) mit Hilfe eines Dispermats und Dissolverscheibe. Es bildete sich eine Emulsion. Man überführte die so hergestellte Emulsion in einen Polymerisationskessel mit Rührer und gab 2 g einer 75 Gew.-% wässrigen Lösung von tert.-Butylperpivalat zu. Man stellte die Rührergeschwindigkeit auf 150 Upm. Man erhitzte innerhalb von 3 Stunden auf 85°C und rührte über einen Zeitraum von 3 Stunden bei 85°C. Zum Zweck der Desodorierung gab man 5,80 g einer wässrigen Lösung von tert.-Butylhydroperoxid (10 Gew.-%) und 0,32 g Ascorbinsäure bei 85°C zu. Man erhielt eine wässrige Suspension von erfindungsgemäßen sphärischen Partikeln P.6, deren pH-Wert man durch Zugabe von wässriger Ammoniaklösung (25 Gew.-%) auf 8 einstellte.

Analytische Daten:
Feststoffgehalt: 49,4%
Mittlerer Partikeldurchmesser: 7,3 µm
T_{g}: -55,3°C
Viskosität: 256 mPa·s, bestimmt mittels Brookfield-Rheometer bei Raumtemperatur.

### I.7 Herstellung von erfindungsgemäßen sphärischen Partikeln P.7 (erfindungsgemäß, aber ohne Anwendungsbeispiel)

Man stellte zunächst eine Wasserphase W7, her, indem man miteinander verrührte:

| | |
|---|---|
| 866,2 g | Wasser |
| 34,2 g | Schutzkolloid Methylhydroxypropylcellulose als 5 Gew.-% wässrige Lösung, kommerziell erhältlich als Culminal® MHPC 100 |
| 8,55 g | Polyvinylalkohol (partiell verseiftes Polyvinylacetat) als 10 Gew.-% wässrige Lösung, Viskosität: 15 mPa·s nach DIN 53015 (gemessen als 4 Gew.-% wässrige Lösung bei 20°C), Verseifungszahl: 200 mg KOH/g, bestimmt nach DIN 53401, als Schutzkolloid, kommerziell erhältlich als Mowiol® 15-79 |
| 0,43 g | Natriumnitrit als 2,5 Gew.-% Lösung in Wasser |

Anschließend stellte man Monomerphase M7 her, indem man miteinander verrührte:

| | |
|---|---|
| 85,0 g | n-Butylacrylat |
| 5,0 g | 1,4-Butandioldiacrylat |
| 5,0 g | Methacrylsäure |
| 5,0 g | Wachs 2 (1:1-Gemisch aus den linearen Paraffinen n-C₁₈H₃₈ und n-C₂₀H₄₂). |

Man gab Monomerphase M7 zu Wasserphase W7 und vermischte 20 Minuten bei 2800 Upm mit Hilfe eines Dispermats und Dissolverscheibe. Es bildete sich eine Emulsion. Man überführte die so hergestellte Emulsion in einen Polymerisationskessel mit Rührer und gab 0,5 g tert.-Butylperpivalat zu. Man stellte die Rührergeschwindigkeit auf 150 Upm. Man erhitzte innerhalb von 3 Stunden auf 85°C und rührte über einen Zeitraum von 3 Stunden bei 85°C. Zum Zweck der Desodorierung gab man 1,42 g einer wässrigen Lösung von tert.-Butylhydroperoxid (10 Gew.-%) und 0,08 g Ascorbinsäure bei 85°C zu. Man erhielt eine wässrige Suspension von erfindungsgemäßen sphärischen Partikeln P.7, deren pH-Wert man durch Zugabe von wässriger Ammoniaklösung (25 Gew.-%) auf 8 einstellte.

Analytische Daten:
Feststoffgehalt: 6,7%
Mittlerer Partikeldurchmesser: 9,1 µm
T_{g}: -40,5°C
Viskosität: 15 mPa·s, bestimmt mittels Brookfield-Rheometer bei Raumtemperatur.

### I.8 Herstellung von sphärischen Partikeln V-P.8 (Vergleichsversuch)

Man stellte zunächst eine Wasserphase W8, her, indem man miteinander verrührte:

| | |
|---|---|
| 571,8 g | Wasser |
| 102,6 g | Schutzkolloid Methylhydroxypropylcellulose als 5 Gew.-% wässrige Lösung, kommerziell erhältlich als Culminal® MH PC 100 |
| 25,7 g | Polyvinylalkohol (partiell verseiftes Polyvinylacetat) als 10 Gew.-% wässrige Lösung, Viskosität: 15 mPa·s nach DIN 53015 (gemessen als 4 Gew.-% wässrige Lösung bei 20°C), Verseifungszahl: 200 mg KOH/g, bestimmt nach DIN 53401, als Schutzkolloid, kommerziell erhältlich als Mowiol® 15-79 |
| 1,3 g | Natriumnitrit als 2,5 Gew.-% Lösung in Wasser |

Anschließend stellte man Monomerphase M8 her, indem man miteinander verrührte:

| | |
|---|---|
| 255,0 g | Methylmethacrylat (85 %) |
| 15,0 g | 1,4-Butandioldiacrylat (5,0 %) |
| 15,0 g | Methacrylsäure (5,0 %) |
| 15,0 g | Wachs 2 (1:1-Gemisch aus den linearen Paraffinen n-C₁₈H₃₈ und n-C₂₀H₄₂). |

Man gab Monomerphase M8 zu Wasserphase W8 und vermischte 20 Minuten bei 3300 Umdrehungen pro Minute (Upm) mit Hilfe eines Dispermats und Dissolverscheibe. Es bildete sich eine Emulsion. Man überführte die so hergestellte Emulsion in einen Polymerisationskessel mit Rührer und gab 1,5 g einer 75 Gew.-% wässrigen Lösung von tert.-Butylperpivalat zu. Man stellte die Rührergeschwindigkeit auf 150 Upm. Man erhitzte innerhalb von 3 Stunden auf 85°C und rührte über einen Zeitraum von 3 Stunden bei 85°C. Zum Zweck der Desodorierung gab man 4,27 g einer wässrigen Lösung von tert.-Butylhydroperoxid (10 Gew.-%) und 0,24 g Ascorbinsäure bei 85°C zu. Man erhielt eine wässrige Suspension von Partikeln V-P.8, deren pH-Wert man durch Zugabe von wässriger Ammoniaklösung (25 Gew.-%) auf 8 einstellte.

Analytische Daten:
Feststoffgehalt: 26,5%
Mittlerer Partikeldurchmesser: 12,1 µm
T_{g}: +107,5°C
Viskosität: 32 mPa·s, bestimmt mittels Brookfield-Rheometer bei 20°C.

### I.9 Herstellung von sphärischen Partikeln V-P.9 (Vergleichsversuch)

Man stellte zunächst eine Wasserphase W9, her, indem man miteinander verrührte:

| | |
|---|---|
| 574,3 g | Wasser |
| 102,6 g | Schutzkolloid Methylhydroxypropylcellulose als 5 Gew.-% wässrige Lösung, kommerziell erhältlich als Culminal® MHPC 100 |
| 25,7 g | Polyvinylalkohol (partiell verseiftes Polyvinylacetat) als 10 Gew.-% wässrige Lösung, Viskosität: 15 mPa·s nach DIN 53015 (gemessen als 4 Gew.-% wässrige Lösung bei 20°C), Verseifungszahl: 200 mg KOH/g, bestimmt nach DIN 53401, als Schutzkolloid, kommerziell erhältlich als Mowiol® 15-79 |
| 1,3 g | Natriumnitrit als 2,5 Gew.-% Lösung in Wasser |

Anschließend stellte man Monomerphase M9 her, indem man miteinander verrührte:

| | |
|---|---|
| 255,0 g | Styrol |
| 15,0 g | 1,4-Butandioldiacrylat |
| 15,0 g | Methacrylsäure |
| 15,0 g | Wachs 2 (1:1-Gemisch aus den linearen Paraffinen n-C₁₈H₃₈ und n-C₂₀H₄₂). |

Man gab Monomerphase M9 zu Wasserphase W9und vermischte 20 Minuten bei 2800 Upm mit Hilfe eines Dispermats und Dissolverscheibe. Es bildete sich eine Emulsion. Man überführte die so hergestellte Emulsion in einen Polymerisationskessel mit Rührer und gab 3,9 g Dilaurylperoxid zu. Man stellte die Rührergeschwindigkeit auf 150 Upm. Man erhitzte innerhalb von 3 Stunden auf 85°C und rührte über einen Zeitraum von 3 Stunden bei 85°C. Zum Zweck der Desodorierung gab man 4,27 g einer wässrigen Lösung von tert.-Butylhydroperoxid (10 Gew.-%) und 0,24 g Ascorbinsäure bei 85°C zu. Man erhielt eine wässrige Suspension von Partikeln V-P.9, deren pH-Wert man durch Zugabe von wässriger Ammoniaklösung (25 Gew.-%) auf 8 einstellte.

Analytische Daten:
Feststoffgehalt: 27,1 %
Mittlerer Partikeldurchmesser: 10,6 µm
T_{g}:+106,4°C
Viskosität: 34 mPa·s, bestimmt mittels Brookfield-Rheometer bei 20°C.

### II. Herstellung von erfindungsgemäßen wässrigen Formulierungen und Vergleichsbeispiel

Als A-Dispersion wurde jeweils ein Bindemittel, hergestellt durch Emulsionscopolymerisation gemäß Beispiel 6 aus WO 03/023071, aus Methacrylsäure, Methylmethacrylat, n-Butylacrylat und Acrylamid, als wässrige Dispersion mit einem Feststoffgehalt von 35% eingesetzt (Anmerkung: Es wurde Methacrylsäure statt Acrylsäure eingesetzt). Mengenangaben von erfindungsgemäßen Partikeln und A-Dispersion beziehen sich auf den Feststoffgehalt der jeweiligen Dispersion.

### II.1 Herstellung von erfindungsgemäßen wässrigen Formulierungen und Formulierungen für die Vergleichsbeispiele

Als Verdicker-Lösung wurde jeweils eine wässrige Formulierung eingesetzt, enthaltend:
26 Gew.-% mit C₁₆-C₁₈-Fettalkohol an beiden Enden verschlossenes Polyethylenoxid mit Mₙ 20.000 g/mol und M_{w} 30.000 g/mol
11 Gew.-% Diethylenglykol-mono-n-butylether ("Butyldiglykol")
2 Gew.-% N-Methylpyrrolidon
61 Gew.-% Wasser

Für die Vergleichsbeispiele wurde vermischt:
70 g A-Dispersion
2,1 g amorphe Kieselsäure
3,2 g Verdicker-Lösung
24,7 g destilliertes Wasser

Man erhielt eine Vorstufe der Vergleichsformulierung V-F.1. Die Vorstufe hatte einen Feststoffgehalt von 29,8%.

Weiterhin vermischte man:
57,9 g A-Dispersion
1,9 g amorphe Kieselsäure
2,9 g Verdicker-Lösung
37,3 g destilliertes Wasser

Man erhielt eine Vorstufe der Vergleichsformulierung V-F.2. Die Vorstufe hatte einen Feststoffgehalt von 25,1 %.

Allgemeine Arbeitsvorschrift: Erfindungsgemäße Partikel wurden mit A-Dispersion gemäß Tabelle 1 gemischt. Man erhielt die erfindungsgemäßen wässrigen Formulierungen gemäß Tabelle 1.

**Tabelle 1: Zusammensetzung von erfindungsgemäßen wässrigen Formulierungen und Vergleichsmustern**

| Nummer | Partikel, Menge [g Feststoff] | A-Dispersion [Feststoff] |
|---|---|---|
| F.3 | 70 g P.2 | 30 g |
| F.4 | 60 g P.2 | 40 g |
| V-F.5 | 60 g P.2 | 20 g + 20 g V.F-1 |
| F.6 | 70 g P.2 | 30 g |
| F.7 | 65,6 g P.5 | 30 g |
| F.8 | 66,5 g P.4 | 30 g |
| F.9 | 39 g P.6 | 30 g |
| F.10 | 66,5 g P.4 | 30 g |
| F.11 | 66,7 g P.1 | 30 g |
| F.12 | 68,5 g P.3 | 30 g |
| F.13 | 70 g P.2 | 30 g |

### III. Beschichtung von Leder

### III.1 Beschichtung von mit Hilfe von erfindungsgemäßen wässrigen Formulierungen F.3 bis F.13 und mit Vergleichsformulierungen V-F.1 bis V-F.2

Zu 100 g der unter II. beschriebenen Mischungen bzw. Vorstufen wurde jeweils gegeben:
9 g einer 70 Gew.-% Lösung eines wasseremulgierbaren Hexamethylendiisocyanats nach EP 0 697 424, Beispiel 2,
7,5 g einer 45 Gew.-% wässrigen Dispersion eines Polydimethylsiloxans (Dimethylpolysiloxans)
1,5 g einer Mischung von H(OCH₂CH₂)₃-O-(CH₂)₃-Si(CH₃)[OSi(CH₃)₃]₂ und oxalkyliertem Tridecanol (1:1) in Wasser/Dipropylenglykolmonomethylether (1:2)
und auf 200 g mit Wasser aufgefüllt. Mit Verdicker-Lösung aus II. wurde die Viskosität auf 18 s Auslaufzeit gemäß DIN 53211 eingestellt.

Man erhielt anwendungsfertige Sptritzflotten.

Einheitlich grundiertes Leder wurde in 2 Spritzaufträgen mit Zwischentrocknung appliziert. Dazu wurden je ein Spritzauftrag ä 1,4 und 1,2 g/DIN A 4-Stück appliziert und jeweils 10 min bei 80°C im Umlufttrockenschrank getrocknet. Man erhielt Vergleichsleder V-L.1, Vergleichsleder V-L.2 und V-L.5 und die erfindungsgemäßen Leder L.3, L.4 und L.6 bis L.13 gemäß Tabelle 2.

Bewertet wurde Flexibilität, z.B. Nassflex, geprüft mit Bally-Flexometer nach IUP/20, DIN 53351 und 20.000x geflext, Nassreibechtheit, geprüft mit einem VESLIC-Reibechtheitstester nach DIN 53339 1.000x, Glanz, gemessen mit Glanzmessgerät Fa. Lange, bei 60° Winkel vor und nach 2.000x Trockenreibungen mit VESLIC Reibechtheitstester, sowie Optik, speziell Schwarztiefe, visuell und Haptik, manuell. Erfindungsgemäße Leder zeigten nach einem solchen Reibvorgang wesentlich niedrigere Glanzwerte als die Vergleichsversuche bzw. auch eine geringer Differenz im Glanz nach/vor Trockenreibung. Je höher der Glanz, desto geringer die Rückpolierbarkeit.

Die "Akustik" (das sogenannte Knarzen") wurde durch die Geräuschentwicklung bei manuellem Reiben ermittelt. Man unterschied "starkes Rauschen" (starkes "Knarzen"), "mäßig starkes Rauschen" ("knarzt" hörbar) und "kaum Rauschen" ("knarzt" nicht hörbar).

**Tabelle 2: Eigenschaften von erfindungsgemäßen Ledern**

| Partikel | | Leder | Nassflex 20.000x | Nassrieb 1000 x | Trockenrieb 2000x | Glanz vor Trockenrieb | Glanz nach Trockenrieb | Optik | Haptik | Akustik |
|---|---|---|---|---|---|---|---|---|---|---|
| SiO₂ | V.F.1 | V-L.1 | 5 | 5 | 5 | 1,7 | 2,7 | leicht grau | rauer Griff | starkes Rauschen |
| P.2 | F.3 | L.3 | 5 | 5 | 5 | 1,2 | 1,4 | tiefschwarz | weich, samtig | kaum Rauschen |
| P.2 | F.4 | L.4 | 5 | 5 | 5 | 1,6 | 1,8 | tiefschwarz | weich, samtig | kaum Rauschen |
| P.2 | V-F.5 | V-L.5 | 5 | 5 | 5 | 0,7 | 1,6 | tiefschwarz | weich, samtig | Mäßig starkes Rauschen |
| P.2 | F.6 | L.6 | 5 | 5 | 5 | 1,3 | 1,7 | tiefschwarz | weich, samtig | kaum Rauschen |
| P.5 | F.7 | L.7 | 5 | 5 | 5 | 0,7 | 1 | tiefschwarz | weich, samtig | kaum Rauschen |
| P.4 | F.8 | L.8 | 5 | 5 | 5 | 0,5 | 0,9 | tiefschwarz | weich, samtig | kaum Rauschen |
| P.6 | F.9 | L.9 | 5 | 5 | 5 | 0,6 | 0,9 | tiefschwarz | weich, samtig | kaum Rauschen |
| SiO₂ | V-F.2 | V-L.2 | 5 | 5 | 5 | 1,4 | 3 | leicht grau | rauer Griff | starkes Rauschen |
| P.4 | F.10 | L.10 | 5 | 5 | 5 | 0,7 | 1 | tiefschwarz | weich, samtig | kaum Rauschen |
| P.1 | F.11 | L.11 | 5 | 5 | 5 | 0,7 | 1,1 | tiefschwarz | weich, samtig | kaum Rauschen |
| P.3 | F.12 | L.12 | 5 | 4-5 | 5 | 1,1 | 1,3 | tiefschwarz | weich, samtig | kaum Rauschen |
| P.2 | F.13 | L.13 | 5 | 5 | 5 | 1,3 | 1,7 | tiefschwarz | weich, samtig | kaum Rauschen |

## Patentansprüche

1. Sphärische Partikel mit einem mittleren Durchmesser im Bereich von 1 bis 20 µm, enthaltend
(a) 85 bis 99 Gew.-% eines vernetzten statistischen Copolymers mit einer Glastemperatur T_{g} im Bereich von -75 bis -40°C, bestimmt per DSC nach DIN 53765 abkühlen jeweils auf-110°C, Aufheizrate: 20°C/min, Aufheizen bis 150°C,
(b) und 1 bis 15 Gew.-% mindestens einer organischen Substanz, gewählt aus Wachsen, Schutzkolloiden und Weichmachern, wobei Wachse gewählt werden aus
- Paraffinwachsen mit einem Schmelzpunkt von mindestens 25°C,
- natürlichen Wachsen,
- Polyisobutenen mit einem Molekulargewicht Mₙ im Bereich von 400 bis 1500 g/mol und
- Polyolefinwachsen mit einem mittleren Molekulargewicht Mₙ im Bereich von 500 bis 20.000 g/mol,
wobei Schutzkolloide gewählt werden aus Polyvinylalkohol und modifizierter Cellulose,
und wobei Weichmacher gewählt werden
- aus den Gruppen der mit Alkanolen vollständig veresterten aliphatischen oder aromatischen Di- oder Polycarbonsäuren,
- der mindestens einfach mit Alkanol veresterten Phosphorsäurediarylester,
- mindestens einfach mit C₁-C₁₀-Alkylcarbonsäure mindestens einfach veresterte aliphatische oder aromatische Di- oder Polyole,
- Polyester, erhältlich durch Polykondensation von aliphatischer Dicarbonsäure und aliphatischem Diol, und
- mit zwei verschiedenen Alkoholen veretherte Polypropylenglykole mit einem Molekulargewicht M_{w} im Bereich von 400 bis 800 g/mol, wobei einer der Alkohole ein C₁-C₁₀-Alkanol und der andere Alkohol ein aromatischer Alkohol ist, gewählt aus o-Kresol, m-Kresol, p-Kresol und Phenol.

2. Partikel nach Anspruch 1, **dadurch gekennzeichnet, dass** es sich bei Copolymer (a) um ein Copolymer handelt, das zumindest 80 Gew.-% mindestens ein Comonomer einpolymerisiert enthält, das gewählt wird aus (Meth)acrylsäure-C₄-C₂₀-alkylestern.

3. Partikel nach Anspruch 1 oder 2, **dadurch gekennzeichnet, dass** man Wachse wählt aus Paraffinwachsen mit einem Schmelzpunkt von mindestens 25°C und aus natürlichen Wachsen, gewählt aus Bienenwachs, Carnaubawachs und Montanestern.

4. Partikel nach einem der Ansprüche 1 bis 3, **dadurch gekennzeichnet, dass** Weichmacher gewählt werden aus Di-n-octylphthalat, Di-n-nonylphthalat, Di-n-decylphthalat, Di-n-octylisophthalat, Di-n-nonylisophthalat, Di-n-decylisophthalat, Isodecyldiphenylphosphat, 2,2,4-Trimethylpentan-1,3-diol-monoisobutyrat, Polyester, erhältlich durch Polykondensation von Adipinsäure oder Bernsteinsäure und 1,2-Propandiol, und Polypropylenglykolalkylphenylether.

5. Wässrige Formulierung, enthaltend Partikel nach einem der Ansprüche 1 bis 4.

6. Wässrige Formulierung nach Anspruch 5, **dadurch gekennzeichnet, dass** sie weniger als 2 Gew.-% anorganische Partikel enthalten.

7. Verwendung von Partikeln nach einem der Ansprüche 1 bis 4 oder von wässrigen Formulierungen nach Anspruch 5 oder 6 zur Beschichtung von Substraten.

8. Verfahren zur Beschichtung von Substraten, unter Verwendung von Partikeln nach einem der Ansprüche 1 bis 4 oder wässrigen Formulierungen nach Anspruch 5 oder 6.

9. Verfahren nach Anspruch 8, **dadurch gekennzeichnet, dass** es sich bei Substrat um Leder handelt.

10. Substrate, erhältlich nach einem Verfahren nach einem der Ansprüche 8 oder 9.

11. Verwendung von Substraten nach Anspruch 10 zur Herstellung von Automobilinnenteilen oder von Möbeln.

12. Möbel oder Automobilinnenteile, hergestellt unter Verwendung von Substraten nach Anspruch 10.

13. Verfahren zur Herstellung von sphärischen Partikeln mit einem mittleren Durchmesser im Bereich von 1 bis 20 µm, **dadurch gekennzeichnet, dass** man durch Suspensionspolymerisation
(a) ein vernetztes statistisches Copolymer mit einer Glastemperatur T_{g} im Bereich von -75 bis -40°C herstellt, bestimmt per DSC nach DIN 53765 abkühlen jeweils auf-110°C, Aufheizrate: 20°C/min, Aufheizen bis 150°C, welches
(b) 1 bis 15 Gew.-% mindestens einer organischen Substanz enthält, gewählt aus Wachsen, Schutzkolloiden und Weichmachern, wobei Wachse gewählt werden aus
- Paraffinwachsen mit einem Schmelzpunkt von mindestens 25°C,
- natürlichen Wachsen,
- Polyisobutenen mit einem Molekulargewicht Mₙ im Bereich von 400 bis 1500 g/mol und
- Polyolefinwachsen mit einem mittleren Molekulargewicht Mₙ im Bereich von 500 bis 20.000 g/mol,
wobei Schutzkolloide gewählt werden aus Polyvinylalkohol und modifizierter Cellulose,
und wobei Weichmacher gewählt werden
- aus den Gruppen der mit Alkanolen vollständig veresterten aliphatischen oder aromatischen Di- oder Polycarbonsäuren,
- der mindestens einfach mit Alkanol veresterten Phosphorsäurediarylester,
- mindestens einfach mit C₁-C₁₀-Alkylcarbonsäure mindestens einfach veresterte aliphatische oder aromatische Di- oder Polyole,
- Polyester, erhältlich durch Polykondensation von aliphatischer Dicarbonsäure und aliphatischem Diol, und
- mit zwei verschiedenen Alkoholen veretherte Polypropylenglykole mit einem Molekulargewicht M_{w} im Bereich von 400 bis 800 g/mol, wobei einer der Alkohole ein C₁-C₁₀-Alkanol und der andere Alkohol ein aromatischer Alkohol ist, gewählt aus o-Kresol, m-Kresol, p-Kresol und Phenol.

14. Verfahren nach Anspruch 13, **dadurch gekennzeichnet, dass** es sich bei Copolymer (a) um ein Copolymer handelt, das zumindest 80 Gew.-% mindestens ein Comonomer einpolymerisiert enthält, das gewählt wird aus (Meth)acrylsäure-C₄-C₂₀-alkylestern.

15. Verfahren nach Anspruch 13 oder 14, **dadurch gekennzeichnet, dass** man Wachse wählt aus Paraffinwachsen mit einem Schmelzpunkt von mindestens 25°C und aus natürlichen Wachsen, gewählt aus Bienenwachs, Carnaubawachs und Montanestern.

16. Verfahren nach einem der Ansprüche 13 bis 15, **dadurch gekennzeichnet, dass** Weichmacher gewählt werden aus Di-n-octylphthalat, Di-n-nonylphthalat, Di-n-decylphthalat, Di-n-octylisophthalat, Di-n-nonylisophthalat, Di-n-decylisophthalat, Isodecyldiphenylphosphat, 2,2,4-Trimethylpentan-1,3-diol-monoisobutyrat, Polyester, erhältlich durch Polykondensation von Adipinsäure oder Bernsteinsäure und 1,2-Propandiol, und Polypropylenglykolalkylphenylether.

## Claims

1. A spherical particle having a mean diameter in the range from 1 to 20 µm, comprising
(a) from 85 to 99% by weight of a crosslinked random copolymer having a glass transition temperature T_{g} in the range from -75 to -40°C, determined by DSC according to DIN 53765, cooling in each case to -110°C, heating rate: 20°C/min, heating to 150°C,
(b) and from 1 to 15% by weight of at least one organic substance selected from waxes, protective colloids and plasticizers, waxes being selected from
- paraffin waxes having a melting point of at least 25°C,
- natural waxes,
- polyisobutenes having a molecular weight Mₙ in the range from 400 to 1500 g/mol and
- polyolefin waxes having an average molecular weight Mₙ in the range from 500 to 20 000 g/mol,
protective colloids being selected from polyvinyl alcohol and modified cellulose,
and plasticizers being selected
- from the groups of the aliphatic or aromatic di- or polycarboxylic acids completely esterified with alkanols,
- of the diaryl phosphates at least monoesterified with alkanol,
- aliphatic or aromatic di- or polyols at least monoesterified with C₁-C₁₀-alkylcarboxylic acid,
- polyesters obtainable by polycondensation of aliphatic dicarboxylic acid and aliphatic diol, and
- polypropylene glycols etherified with two different alcohols and having a molecular weight M_{w} in the range from 400 to 800 g/mol, one of the alcohols being a C₁-C₁₀-alkanol and the other alcohol being an aromatic alcohol selected from o-cresol, m-cresol, p-cresol and phenol.

2. The particle according to claim 1, wherein copolymer (a) is a copolymer which comprises at least 80% by weight of at least one comonomer which is incorporated in the form of polymerized units and is selected from C₄-C₂₀-alkyl (meth)acrylates.

3. The particle according to claim 1 or 2, wherein waxes are selected from paraffin waxes having a melting point of at least 25°C and from natural waxes selected from beeswax, carnauba wax and montanic esters.

4. The particle according to any of claims 1 to 3, wherein plasticizers are selected from di-n-octyl phthalate, di-n-nonyl phthalate, di-n-decyl phthalate, di-n-octyl isophthalate, di-n-nonyl isophthalate, di-n-decyl isophthalate, isodecyl diphenylphosphonate, 2,2,4-trimethylpentane-1,3-diol monoisobutyrate, polyesters obtainable by polycondensation of adipic acid or succinic acid and 1,2-propanediol, and polypropylene glycol alkylphenyl ether.

5. An aqueous formulation comprising particles according to any of claims 1 to 4.

6. The aqueous formulation according to claim 5, which comprises less than 2% by weight of inorganic particles.

7. The use of particles according to any of claims 1 to 4 or of aqueous formulations according to claim 5 or 6 for coating substrates.

8. A process for coating substrates using particles according to any of claims 1 to 4 or aqueous formulations according to claim 5 or 6.

9. The process according to claim 8, wherein the substrate is leather.

10. A substrate obtainable by a process according to either of claims 8 or 9.

11. The use of substrates according to claim 10 for the production of interior automotive parts or of pieces of furniture.

12. A piece of furniture or interior automotive part produced using substrates according to claim 10.

13. A process for the production of spherical particles having a mean diameter in the range from 1 to 20 µm, wherein
(a) a crosslinked random copolymer having a glass transition temperature T_{g} in the range from -75 to -40°C, determined by DSC according to DIN 53765, cooling in each case to -110°C, heating rate: 20°C/min, heating to 150°C, is prepared by suspension polymerization, which copolymer comprises
(b) from 1 to 15% by weight of at least one organic substance selected from waxes, protective colloids and plasticizers, waxes being selected from
- paraffin waxes having a melting point of at least 25°C,
- natural waxes,
- polyisobutenes having a molecular weight Mₙ in the range from 400 to 1500 g/mol and
- polyolefin waxes having an average molecular weight Mₙ in the range from 500 to 20 000 g/mol,
protective colloids being selected from polyvinyl alcohol and modified cellulose,
and plasticizers being selected
- from the groups of the aliphatic or aromatic di- or polycarboxylic acids completely esterified with alkanols,
- of the diaryl phosphates at least monoesterified with alkanol,
- aliphatic or aromatic di- or polyols at least monoesterified with C₁-C₁₀-alkylcarboxylic acid,
- polyesters obtainable by polycondensation of aliphatic dicarboxylic acid and aliphatic diol, and
- polypropylene glycols etherified with two different alcohols and having a molecular weight M_{w} in the range from 400 to 800 g/mol, one of the alcohols being a C₁-C₁₀-alkanol and the other alcohol being an aromatic alcohol selected from o-cresol, m-cresol, p-cresol and phenol.

14. The process according to claim 13, wherein copolymer (a) is a copolymer which comprises at least 80% by weight of at least one comonomer which is incorporated in the form of polymerized units and is selected from C₄-C₂₀-alkyl (meth)acrylates.

15. The process according to claim 13 or 14, wherein waxes are selected from paraffin waxes having a melting point of at least 25°C and from natural waxes, selected from beeswax, carnauba wax and montanic esters.

16. The process according to any of claims 13 to 15, wherein plasticizers are selected from di-n-octyl phthalate, di-n-nonyl phthalate, di-n-decyl phthalate, di-n-octyl isophthalate, di-n-nonyl isophthalate, di-n-decyl isophthalate, isodecyl diphenylphosphonate, 2,2,4-trimethylpentane-1,3-diol monoisobutyrate, polyesters obtainable by polycondensation of adipic acid or succinic acid and 1,2-propanediol, and polypropylene glycol alkylphenyl ether.

## Revendications

1. Particules sphériques présentant un diamètre moyen dans la plage de 1 à 20 µm, contenant
(a) 85 à 99% en poids d'un copolymère statistique réticulé présentant une température de transition vitreuse T_{g} dans la plage de -75 à -40°C, déterminée par DSC (calorimétrie différentielle par balayage) selon la norme DIN 53765, refroidissement à chaque fois à -110°C, vitesse de chauffage : 20°C/min, chauffage jusqu'à 150°C,
(b) et 1 à 15% en poids d'au moins une substance organique, choisie parmi les cires, les colloïdes de protection et les plastifiants,
en choisissant des cires parmi
- les cires de paraffine présentant un point de fusion d'au moins 25°C,
- les cires naturelles,
- les polyisobutènes présentant un poids moléculaire Mₙ dans la plage de 400 à 1500 g/mole et
- les cires de polyoléfine présentant un poids moléculaire moyen Mₙ dans la plage de 500 à 20 000 g/mole,
en choisissant les colloïdes de protection parmi le poly(alcool vinylique) et la cellulose modifiée,
et en choisissant les plastifiants parmi
- les groupes des acides dicarboxyliques ou polycarboxyliques aliphatiques ou aromatiques complètement estérifiés par des alcanols,
- les esters diaryliques de l'acide phosphorique au moins mono-estérifiés par un alcanol,
- les diols ou polyols aliphatiques ou aromatiques au moins mono-estérifiés par un acide C₁-C₁₀-alkylcarboxylique,
- les polyesters, pouvant être obtenus par polycondensation d'un acide dicarboxylique aliphatique et d'un diol aliphatique, et
- les polypropylèneglycols éthérifiés par deux alcools différents, présentant un poids moléculaire M_{w} dans la plage de 400 à 800 g/mole, où un des alcools est un C₁-C₁₀-alcanol et l'autre alcool un alcool aromatique, choisi parmi l'o-crésol, le m-crésol, le p-crésol et le phénol.

2. Particule selon la revendication 1, **caractérisée en ce qu'**il s'agit, pour le copolymère (a), d'un copolymère qui contient, sous forme copolymérisée, à raison d'au moins 80% en poids un comonomère choisi parmi les esters C₄-C₂₀-alkyliques de l'acide (méth)acrylique.

3. Particule selon la revendication 1 ou 2, **caractérisée en ce qu'**on choisit des cires parmi les cires de paraffine présentant un point de fusion d'au moins 25°C et parmi les cires naturelles, choisies parmi la cire d'abeille, la cire de carnauba et les esters de montane.

4. Particule l'une quelconque des revendications 1 à 3, **caractérisée en ce que** les plastifiants sont choisis parmi le phtalate de di-n-octyle, le phtalate de di-n-nonyle, le phtalate de di-n-décyle, l'isophtalate de di-n-octyle, l'isophtalate de di-n-nonyle, l'isophtalate de di-n-décyle, le diphénylphosphate d'isodécyle, le monoisobutyrate de 2,2,4-triméthylpentane-1,3-diol, les polyesters, pouvant être obtenus par polycondensation d'acide adipique ou d'acide succinique et de 1,2-propanediol, et les polypropylèneglycolalkylphényléthers.

5. Formulation aqueuse, contenant des particules selon l'une quelconque des revendications 1 à 4.

6. Formulation aqueuse selon la revendication 5, **caractérisée en ce qu'**elle contient moins de 2% en poids de particules inorganiques.

7. Utilisation de particules selon l'une quelconque des revendications 1 à 4 ou de formulations aqueuses selon la revendication 5 ou 6 pour le revêtement de substrats.

8. Procédé pour le revêtement de substrats, avec utilisation de particules selon l'une quelconque des revendications 1 à 4 ou de formulations aqueuses selon la revendication 5 ou 6.

9. Procédé selon la revendication 8, **caractérisé en ce qu'**il s'agit, pour le substrat, de cuir.

10. Substrats, pouvant être obtenus selon l'une quelconque des revendications 8 ou 9.

11. Utilisation de substrats selon la revendication 10 pour la fabrication de pièces internes de voitures ou de meubles.

12. Meubles ou pièces internes de voitures, fabriqué(e)s avec utilisation de substrats selon la revendication 10.

13. Procédé pour la fabrication de particules sphériques présentant un diamètre moyen dans la plage de 1 à 20 µm, **caractérisé en ce qu'**on prépare, par polymérisation en suspension
(a) un copolymère statistique réticulé présentant une température de transition vitreuse T_{g} dans la plage de -75 à -40°C, déterminée par DSC (calorimétrie différentielle par balayage) selon la norme DIN 53765, refroidissement à chaque fois à -110°C, vitesse de chauffage : 20°C/min, chauffage jusqu'à 150°C, qui
(b) contient 1 à 15% en poids d'au moins une substance organique, choisie parmi les cires, les colloïdes de protection et les plastifiants,
en choisissant des cires parmi
- les cires de paraffine présentant un point de fusion d'au moins 25°C,
- les cires naturelles,
- les polyisobutènes présentant un poids moléculaire Mₙ dans la plage de 400 à 1500 g/mole et
- les cires de polyoléfine présentant un poids moléculaire moyen Mₙ dans la plage de 500 à 20 000 g/mole,
en choisissant les colloïdes de protection parmi le poly(alcool vinylique) et la cellulose modifiée,
et en choisissant les plastifiants parmi
- les groupes des acides dicarboxyliques ou polycarboxyliques aliphatiques ou aromatiques complètement estérifiés par des alcanols,
- les esters diaryliques de l'acide phosphorique au moins mono-estérifiés par un alcanol,
- les diols ou polyols aliphatiques ou aromatiques au moins mono-estérifiés par un acide C₁-C₁₀-alkylcarboxylique,
- les polyesters, pouvant être obtenus par polycondensation d'un acide dicarboxylique aliphatique et d'un diol aliphatique, et
- les polypropylèneglycols éthérifiés par deux alcools différents, présentant un poids moléculaire M_{w} dans la plage de 400 à 800 g/mole, où un des alcools est un C₁-C₁₀-alcanol et l'autre alcool un alcool aromatique, choisi parmi l'o-crésol, le m-crésol, le p-crésol et le phénol.

14. Procédé selon la revendication 13, **caractérisé en ce qu'**il s'agit, pour le copolymère (a), d'un copolymère qui contient, sous forme copolymérisée, à raison d'au moins 80% en poids un comonomère choisi parmi les esters C₄-C₂₀-alkyliques de l'acide (méth)acrylique.

15. Procédé selon la revendication 13 ou 14, **caractérisé en ce qu'**on choisit des cires parmi les cires de paraffine présentant un point de fusion d'au moins 25°C et parmi les cires naturelles, choisies parmi la cire d'abeille, la cire de carnauba et les esters de montane.

16. Procédé selon l'une quelconque des revendications 13 à 15, **caractérisé en ce que** les plastifiants sont choisis parmi le phtalate de di-n-octyle, le phtalate de di-n-nonyle, le phtalate de di-n-décyle, l'isophtalate de di-n-octyle, l'isophtalate de di-n-nonyle, l'isophtalate de di-n-décyle, le diphénylphosphate d'isodécyle, le monoisobutyrate de 2,2,4-triméthylpentane-1,3-diol, les polyester, pouvant être obtenus par polycondensation d'acide adipique ou d'acide succinique et de 1,2-propanediol, et les polypropylèneglycolalkylphényléthers.
